# EUROPEAN PATENT APPLICATION

(11) **EP 2 568 470 A2**
(43) Date of publication of application: **13.03.2013**
(21) Application number: 12183240.6
(22) Date of filing: 05.09.2012
(51) Int. Cl.: G10L 15/26

(54) **Providing audio-activated resource access for user devices**

(30) Priority: 09.09.2011 US 201113229248
(71) Applicant: Verisign, Inc., Reston, VA 20190 (US)
(72) Inventor: Ramnath Krishnan, Harshini, Reston, VA Virginia 20190 (US)
(74) Representative: Benson, Christopher

(57) **Abstract**

Methods and computer systems for providing audio-activated resource access for user devices are provided. In at least one embodiment, a computer system may comprise a processor and a memory coupled to the processor. The memory may store instructions to cause the processor to perform operations, the operations comprising capturing audio at a user device. The operations may also comprise using a speech-to-text converter to convert speech transmitted over the audio into text and transmitting the text to a server system to determine a corresponding keyword or phrase. The operations may also comprise receiving a resource corresponding to the keyword or phrase.

In another embodiment, a computer system may comprise a processor and a memory coupled to the processor, the memory storing instructions to cause the processor to perform operations comprising receiving a request from a first device to register a keyword-or phrase-resource pairing and registering the pairing in a database. The operations may also comprise receiving a request from a second device for a resource corresponding to at least one word included in the request from the second device. The operations may also comprise determining whether a keyword- or phrase-resource pairing exists in the database based on the at least one word and transmitting at least one resource to the second device.

## Description

### TECHNICAL FIELD

The techniques described herein relate generally to providing audio-activated resource access for user devices.

### BACKGROUND

Personal electronic user devices ("user devices") such as, for example, smart phones, are ubiquitous in today's society due to advancements in technology, improvements in communications and data networks, the availability and accessibility of various resources, and decreased costs. As a result, the use of such devices continues to increase significantly. In an attempt to provide an enhanced user experience, various tools have been developed for user devices that direct users to desired content quickly and easily. For example, printed labeling or advertising may include one-dimensional (e.g., Universal Product Code (UPC)) or matrix barcodes (e.g., QR Codes) that when read by a user device causes a web browser executing on the user device to be directed to a webpage. Such barcodes may be associated with a product and may include, for example, a Uniform Resource Locator (URL) within the barcodes that, when read by a user device, prompts a web browser application to retrieve related information from the URL or access product information from a webpage identified by the URL. As another example, optical character recognition (OCR) can be used to scan a URL or other text to determine a resource, such as a website, that may be accessed via a user device.

Such techniques, however, rely on printed bar codes and optical scanning to obtain information. In some kinds of communication media, such as television or other video presentation, it may be difficult or impractical to encode information within bar codes or other optical patterns for scanning because the clarity or resolution necessary for decoding such patterns may be lacking. Moreover, such optical techniques are not applicable to non-visual communication media, such as radio or other audio or signal media.

### SUMMARY

Methods and computer systems for providing audio-activated resource access for user devices are provided. In at least one embodiment, a method may comprise capturing audio at a user device and converting speech transmitted over the audio into text. The method may also comprise transmitting the text to a server system to determine a corresponding keyword or phrase. The method may also comprise receiving a resource corresponding to the keyword or phrase.

In another embodiment, a computer system for providing audio-activated resource access for user devices may comprise a processor and a memory coupled to the processor. The memory may store instructions to cause the processor to perform operations, the operations comprising capturing audio at a user device. The operations may also comprise using a speech-to-text converter to convert speech transmitted over the audio into text and transmitting the text to a server system to determine a corresponding keyword or phrase. The operations may also comprise receiving a resource corresponding to the keyword or phrase.

In another embodiment, a method may comprise receiving a request from a first device to register a keyword- or phrase-resource pairing and registering the pairing in a database. The method may also comprise receiving a request from a second device for a resource corresponding to at least one word included in the request from the second device. The method may also comprise determining whether a keyword- or phrase-resource pairing exists in the database based on the at least one word and transmitting at least one resource to the second device.

In another embodiment, a computer system for providing audio-activated resource access for user devices may comprise a processor and a memory coupled to the processor. The memory may store instructions to cause the processor to perform operations, the operations comprising receiving a request from a first device to register a keyword- or phrase-resource pairing and registering the pairing in a database. The operations may also comprise receiving a request from a second device for a resource corresponding to at least one word included in the request from the second device. The operations may also comprise determining whether a keyword- or phrase-resource pairing exists in the database based on the at least one word and transmitting at least one resource to the second device.

### BRIEF DESCRIPTION OF THE DRAWINGS

The accompanying drawings, which are incorporated in and constitute a part of this specification, illustrate various embodiments of the techniques, as described herein, and together with the description, serve to explain the principles of the techniques. In the drawings:

FIG. 1 illustrates a system that may be used with certain embodiments of the techniques;

FIG. 2 illustrates a system that may be used with certain embodiments of the techniques; and

FIG. 3 is a flow diagram illustrating processes that may be used with certain embodiments of the techniques.

### DETAILED DESCRIPTION

Described below are techniques for providing audio-activated resource access for user devices. Certain embodiments of the techniques described herein may enable a user to access resources that are associated with keywords or phrases identified in an audio stream received at a user device. In a particular embodiment, such keywords may be determined by first utilizing a speech-to-text converter to identify words in an audio stream received as input to a user device. A central database containing pre-registered keyword- and/or phrase-resource pairings may then be queried to determine whether a keyword- and/or phrase-resource pairing corresponding to the identified words exists. Based on the determination, one or more resources may be communicated to the user device for access by the user.

Embodiments of the disclosed techniques may provide a variety of benefits and features such as, for example, improved user experience, seamless navigation to a resource relevant to content consumed by a user, and improved marketing and advertising, among many other benefits. Moreover, the use of a speech-to-text converter in accordance with embodiments of the techniques disclosed herein facilitates resource access without needing to perform audio encoding or other audio manipulations.

Reference will now be made to accompanying figures. Wherever possible, the same reference numbers will be used throughout the figures and the following description to refer to the same or similar parts. While several embodiments and features of the techniques are described herein, modifications, adaptations, and other implementations are possible, without departing from the spirit and scope of the techniques. For example, substitutions, additions or modifications may be made to the components illustrated in the figures, and the methods described herein may be modified by substituting, reordering, or adding steps to the disclosed methods. Accordingly, the following detailed description is not intended to limit the techniques to any specific embodiments or examples.

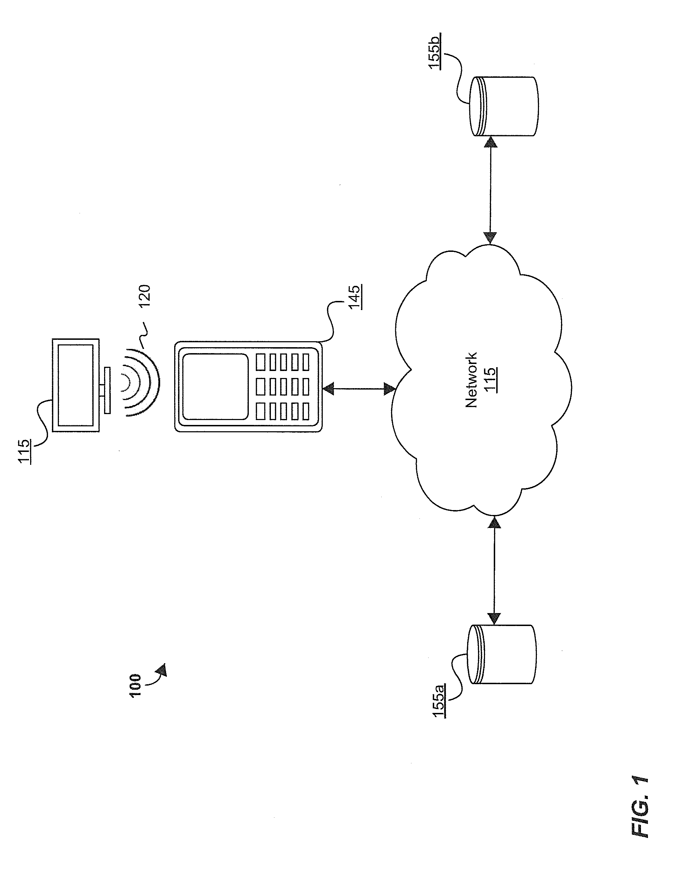

FIG. 1 illustrates a system that may be used for providing audio-activated resource access for user devices. As shown in the embodiment of FIG. 1, an audio stream 120 may be transmitted in connection with a television broadcast. Although a television broadcast is disclosed in the embodiment of FIG. 1, the techniques disclosed herein are applicable to any audio stream originating from any source such as, for example, radio audio, internet streaming audio, live human speech, prerecorded audio, or other human-perceptible and/or human-comprehensible audio. As specific examples, the techniques disclosed herein may be applicable to audio streams that originate from television or radio commercials, recorded or live music, patrons at a sales kiosk, and an information terminal (e.g., airport flight arrival and departure information terminal). The audio streams may be generated and received in various locations as well, including, for example, private locations such as a user's living room, and public locations such as a shopping mall or other large public area.

Also shown in FIG. 1 are data repositories 155a and 155b, and a user device 145, all of which may be communicatively connected with one another, and other components not shown in FIG. 1, via a network 115. In some embodiments, network 115 may be, include, or be part of any one or more of a variety of networks or other types of communication connections as known to those skilled in the art. For example, network 115 may be the internet, an intranet network, a local area network, or other wireless or other hardwired connection or connections by which data repositories 155a and 155b, and user device 145 may communicate.

In certain embodiments, data repositories 155a and 155b may be, include, or be part of any logical and/or physical storage solution that retains digital data. For example, data repositories 155a and 155b may be data storage devices for storing data. As specific examples, data repositories 155a and 155b may be volatile or non-volatile, magnetic, semiconductor, tape, optical, removable, non-removable, or other types of storage or computer-readable media. In these embodiments, data repositories 155a and 155b may store one or more files and/or databases that may be accessed, used, and/or managed by a server (not shown) or user device 145. Data repositories 155a and 155b may include, for example, keywords or phrases, and associated resources, as explained further below. In some embodiments, data repositories 155a and 155b may be, or be communicatively connected to, a proprietary or third-party resolution server responsive to, for example, requests for resources.

User device 145 may be, include, or be part of any electronic device or system. For example, user device 145 may be a television, radio, mobile phone, smart phone, television, ebook reader, personal computer, or other devices capable of capturing audio. In some embodiments, user device 145 may have been equipped for audio capture when user device 145 was manufactured. In other embodiments, user device 145 may require an additional device or functionality be added to enable audio capture. User device 145 may, in some embodiments, be running an operating system and/or proprietary or third-party applications or logic. For example, user device 145 may include a software-implemented speech-to-text converter useful for performing the techniques described herein. In some embodiments, the speech-to-text converter may be, or be part of, an application, such as, for example, a mobile application on a smart phone, which performs the techniques described herein.

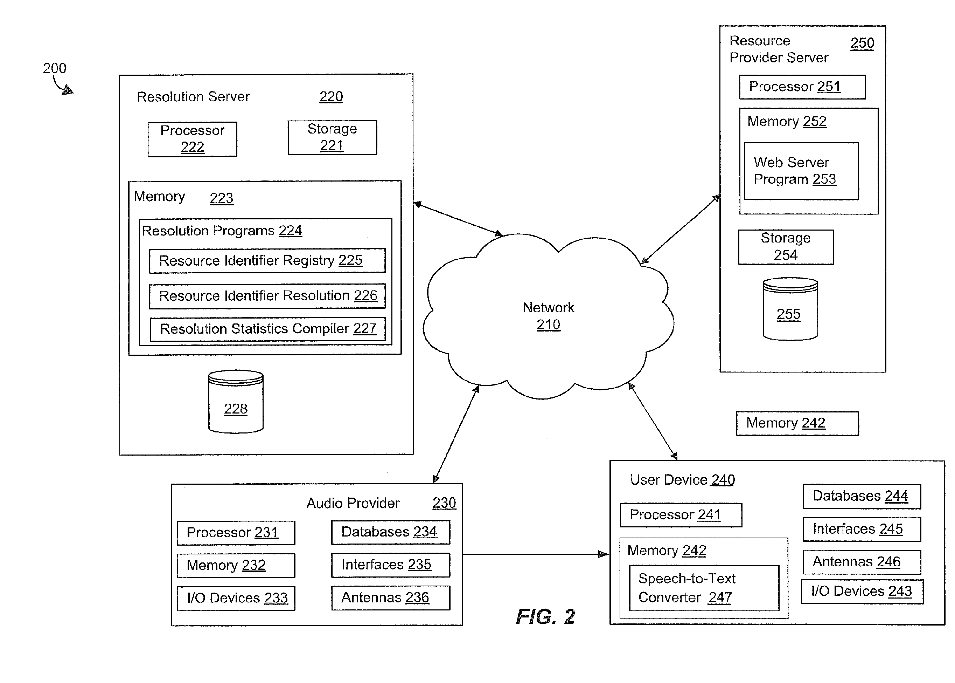

Referring now to FIG. 2, shown is a system 200, which may be used to implement embodiments of the techniques described herein. As shown, system 200 includes a network 210, a resolution server 220, an audio provider 230, a resource provider server 250, and a user device 240. In some embodiments, resolution server 220 may include storage 221, a processor 222, memory 223, input/output (I/O) devices (not shown), and a data repository 228. Resolution server 220 may be implemented in various ways. For example, resolution server 220 may be a general purpose computer, a server, a mainframe computer, or any combination of these components. Resolution server 220 may communicate with other components shown and not shown in system 200 via network 210. Resolution server 220 may be standalone or it may be part of a subsystem, which may, in turn, be part of a larger system, such as a legacy domain registration system.

Storage 221 may be, include, or be part of one or more storage devices configured to store information used by processor 222 to perform certain functions related to the disclosed techniques. For example, storage 221 may include a volatile or non-volatile, magnetic, semiconductor, tape, optical, removable, non-removable, or other type of storage device or computer-readable media. In one embodiment, memory 223 may include one or more resolution programs or subprograms 224 loaded from storage 221 or elsewhere that, when executed by processor 222, perform various procedures, operations, or processes consistent with the disclosed techniques. For example, memory 223 may include a resource identifier registry program 225 that may be used for registering keyword- and/or phrase-resource pairings, a resource identifier resolution program 226 that may be used for retrieving a resource based on a keyword and/or phrase, and a resolution statistics compiler program 227 that may be used for building user profiles based on historical data generated by performing the techniques disclosed herein such as, for example, data generated by past user and/or user device resource requests. Memory 223 may also be configured with an operating system (not shown) that performs several functions well known in the art when executed by processor 222.

Resolution server 220 may include one or more I/O devices (not shown) that allow data to be received and/or transmitted by resolution server 220. I/O devices may include one or more digital and/or analog communication I/O devices that allow resolution server 220 to communicate with other machines and devices. The configuration and number of input and/or output devices incorporated in I/O devices may vary as appropriate for certain embodiments.

Resolution server 220 may also be communicatively connected to one or more data repositories 228. Data repository 228 may include one or more files, or one or more relational and/or non-relational databases that store information that may be accessed and/or managed by resolution server 220. The databases or other files may include, for example, data and information related to keyword- and/or phrase-resource pairings as well as user profile data.

As shown in FIG. 2, audio provider 230 may include, for example, at least one processor 231 configured to execute computer program instructions to perform various processes and methods, at least one memory device 232 configured to access and store information and computer program instructions, I/O devices 233, databases 234 to store tables, lists, or other data structures, interfaces 235, and antennas 236.

As also shown in FIG. 2, user device 240 may include, for example, at least one processor 241 configured to execute computer program instructions to perform various processes and methods, at least one memory device 242 configured to access and store information and computer program instructions such as, for example, a speech-to-text converter program 247; I/O devices 243; databases 244 to store tables, lists, or other data structures; interfaces 245; and antennas 246. Although not shown, user device 240 may also include one or more programs configured to access network 210, and display information received via network 210 via a browser, such as a web browser.

Speech-to-text converter 247 may recognize and convert speech into text. Certain embodiments may implement speech-to-text converter 247 with hardware circuitry or with software or firmware stored within memory 242 in user device 240 and executed by processor 241. In embodiments where speech-to-text converter 247 is implemented as software, speech-to-text converter 247 may be a standalone software application that may be used alone or in combination with other software applications, or it may instead be a component of a larger software application. In some embodiments, speech-to-text converter 247 may identify words in an input audio stream based on one or more speech recognition techniques, and convert the words into text for transmission to another entity such as, for example, resolution server 220 or resource provider server 250.

In some embodiments, speech-to-text converter 247 may be activated and deactivated automatically. For example, speech-to-text converter 247 may be automatically activated upon receiving audio input via a microphone and automatically deactivated once the audio input stops. Additionally or alternatively, in other embodiments, speech-to-text converter 247 may be activated or deactivated by a user of user device 240. In yet another embodiment, speech-to-text converter 247 may be continuously active.

Resource provider server 250 may include, for example, a processor 251, memory 252, I/O devices (not shown), storage 254, and a data repository 255. Resource provider server 250 may be implemented in various ways. For example, resource provider server 250 may be a general purpose computer, a server, a mainframe computer, or any combination of these components. Resource provider server 250 may communicate with components shown or not shown in system 200 via network 115. Resource provider server 250 may be standalone or it may be part of a subsystem, which may, in turn, be part of a larger system, such as a legacy domain registration system.

Storage 254 may be, include, or be part of one or more storage devices configured to store information used by processor 251 to perform certain functions related to the disclosed embodiments. For example, storage 254 may include a volatile or non-volatile, magnetic, semiconductor, tape, optical, removable, non-removable, or other type of storage device or computer-readable media.

In one embodiment, memory 252 may include one or more web server programs or subprograms 253 loaded from storage 254 or elsewhere that, when executed by processor 251, perform various procedures, operations, or processes consistent with embodiments of the disclosed techniques. For example, web server program 253 may be configured to register keyword- and phrase-resource pairings, identify resources based on provided keywords and/or phrases, and/or build user profiles based on historical data generated by performing the techniques disclosed herein such as, for example, data generated by past user and/or user device resource requests. Memory 252 may be also be configured with an operating system (not shown) that performs several functions well known in the art when executed by resource provider server 250.

Resource provider server 250 may include one or more I/O devices (not shown) that allow data to be received and/or transmitted by resource provider server 250. I/O devices may include one or more digital and/or analog communication input/output devices that allow resource provider server 250 to communicate with other machines and devices. Resource provider server 250 may receive data from external machines and devices and output data to external machines and devices via I/O devices. The configuration and number of input and/or output devices incorporated in I/O devices may vary as appropriate for certain embodiments.

Resource provider server 250 may also be communicatively connected to one or more data repositories 255. Data repository 255 may include one or more files or relational and/or non-relational databases that store information and may be accessed and/or managed by resource provider server 250. The databases or other files may include, for example, data and information related to keyword- and phrase-resource pairings as well as user profile data.

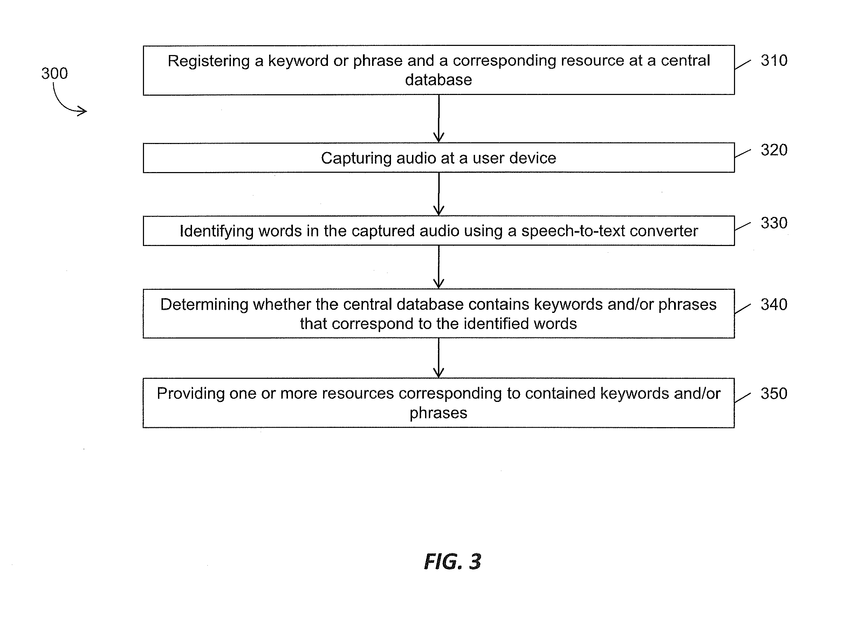

Referring now to FIG. 3, shown is flow chart 300 illustrating embodiments of the techniques described herein for providing resource access for user devices. In step 310, a keyword or phrase and a corresponding resource (i.e., a pairing) may be registered at a central database and/or other registries such as, for example, resolution server 220 or resource provider server 250 of FIG. 2, in response to a registration request. In some embodiments, a registration request may be made by various types of devices or entities, including, for example, one or more individuals, one or more computer systems, or a resource provider such as a retailer, a marketer, or any other type of organization. As a specific example, a registration request may be made by an entity broadcasting or publishing advertisements.

In some embodiments, any keyword or phrase may be registered with a corresponding resource. However, other embodiments may allow registration only if the keyword or phrase is related to the resource. For example, a phrase consisting of song lyrics may be registered with a related corresponding resource such as a link to a website associated with the artist of the song. However, the same phrase may not be registered with an unrelated resource such as a link to a website associated with a different artist. In some embodiments, a keyword or phrase may correspond to multiple resources and/or a resource may correspond to multiple keywords or phrases.

In certain embodiments, a resource may provide a user further details about content being consumed by the user. A resource may also or alternatively facilitate a marketing or public service campaign. For example, in some embodiments, a resource may be, or be provided via, an internet protocol (IP) address or other network address, a hostname or domain name, a Uniform Resource Identifier (URI), a Uniform Resource Number (URN), a URL, a phone number, an email address, a text message, an image file, a Short Message Service (SMS) location, or a Multimedia Message Service (MMS) location. Other example resources may include Media Access Control (MAC) addresses, Ethernet Hardware Address (EHA) addresses, Bluetooth addresses, an International Mobile Subscriber Identity (IMSI), a subscriber identity module or subscriber identification module (SIM), a Removable User Identity Module (R-UIM), an Internet eXchange (IPX), X.25, BLNA, or a Global Positioning System (GPS) coordinate.

In some embodiments, a resource may be a link to, or in the form of, a file, folder, or other item stored on the user device or external to the user device such as, for example, on an external storage device or server (e.g., resolution server 220 of FIG. 2). For example, an application executing on a device may retrieve a discount coupon that was previously stored on the user device (e.g., in the form of an image file) in response to the identification of a keyword and/or phrase in lyrics of a song being played in a store. As a similar example, the discount coupon may be stored in resolution server 220 of FIG. 2 and communicated to the user device and/or a user of the user device in response to the identification of a keyword and/or phrase in lyrics of a song being played in a store.

As another example of a resource, in a case where a user's device is not connected to the internet, such as when a user's mobile device is not subscribed to a data plan, the user device may be directed to call a pre-configured phone number. For example, a software application on the user device may communicate with one or more central databases or registries via SMS or MMS after which a response from the central database may prompt the user of the user device to call a phone number provided by the central database.

A resource may also comprise an action in some embodiments. For example, a resource may include instructions for directing a user device, or an application or other component executing or residing on the user device, to perform actions such as receiving email, forwarding or sending email, deleting email, exchanging email, using other messaging protocols, such as, Post Office Protocol (POP), Internet Message Access Protocol (IMAP), Simple Mail Transfer Protocol (SMTP), or otherwise manipulating email or other messages, whether occurring in the link layer, internet layer, transport layer, or application layer. As other examples, an action may comprise directing a web browser or application executing on a user device to a particular website, displaying text, an image, or a video on a user device, directing a television to a particular channel, executing a particular application on a user device, playing sound on a user device, or any other action capable of being performed on a user device. It should be noted that actions, as well as other resources, may vary with different user devices.

In yet other embodiments, a resource may, for example, specify indices or pointers to a separate database that contains further information about how to access a resource. In some embodiments, the indices may be single or multibit indices into separate databases. In other embodiments, the indices may be unique data strings that serve as indices into separate databases. A separate database may be provided by third-party resolution service providers or resolution servers. In still other embodiments, a resource may be determined using a computer algorithm or logic that, for example, is capable of execution on the user device as particular software installed on the user device in the form of an application, widget, or native software.

In some embodiments, resources may be edited after registration. Editing may include, for example, changing a resource and/or changing a keyword or phrase. In certain embodiments, changes can be made manually by a registering entity or automatically based on a computer algorithm or logic.

Referring still to Figure 3, in step 320, audio may be captured at a user device. For example, in some embodiments, audio may be transmitted in a region and captured by a user device such as user device 240 of FIG. 2, which may be, for example, a cellular telephone, smart phone, or other user device having a microphone or other input means to capture audio. In step 330, a speech-to-text converter may be used to identify words in the captured audio. In some embodiments, as mentioned above with reference to speech-to-text converter 247 of FIG. 2, a speech-to-text converter may automatically identify words upon receipt of the audio at a user device. In other embodiments, a user may activate a software application on a user device to identify words in the captured audio using a speech-to-text converter. For example, a user watching a television broadcast may activate an application on a user device for the purpose of obtaining additional information about the content of the broadcast.

As a specific example, a user may activate an application on a user device such as a smart phone, personal computer, or other similar user device by entering a predefined sequence (e.g., #555) or actuating a button on the user device. As another example, the user may be informed of the presence of audio such as by announcements on a television channel the user is watching, signs or announcements in a location such as a shopping mall or airport, by the user device itself, or via any other suitable mechanism, thereby notifying the user to activate a speech-to-text converter. Alternatively, a user device may be operated in a monitoring mode, enabling the automatic activation of a speech-to-text converter upon detection of audio.

In step 340, it may be determined whether the central database contains keywords and/or phrases that correspond to the identified words. In some embodiments, an application on the user device may query an internal database to determine whether one or more identified words have one or more associated keywords and/or phrases. In other embodiments, the user device may transmit one or more identified words to a central database such as, for example, resolution server 220 or resource provider server 250 of FIG. 2. The central database may in turn determine whether the one or more identified words have one or more associated keywords and/or phrases. In some embodiments, identified words may be continuously transmitted to the central database. In other embodiments, identified words may be transmitted in accordance with a predefined time interval. In certain embodiments, identified words may be used to initiate the execution of an application, program, or action on a device without determining whether a database contains corresponding keywords and/or phrases. It should also be noted that some or all of these embodiments may internally and/or externally store identified words for later processing.

Based on the determination, in step 350 one or more resources corresponding to contained keywords and/or phrases may be provided to the user device. In some embodiments, resources are provided to the user on a user device in a selectable format such as, for example, in a selectable textual and/or graphical listing of network links. For instance, an application on a user device initiated by a user, or automatically initiated upon receipt of audio at the user device, may display provided resources for selection by the user. As a specific example, provided resources may consist of one or more selectable advertisement offers that are graphically displayed to the user on the user device. Selecting one of the advertisement offers may, for example, direct a web browser executing on the user device to a website at which the offer may be fulfilled. In other embodiments, as described above, a resource may cause a user device to perform a specific action such as, for example, initiating an application, causing an application to perform a specific action, sending an email, calling a telephone number, displaying text, an image, or a video, or directing a web browser executing on the user device to a specific website. In yet another embodiment, a resource may be automatically or manually bookmarked for later use or review by a user.

In particular embodiments of the techniques described herein, a user device may request user confirmation prior to initiating an action and/or may provide options for how the user would prefer to take various actions such as, for example, accessing a website. In some embodiments, resource requests may include derived geographical location information to ensure a location-appropriate resource. For instance, when the geographical location of a user device is considered, a provided resource may, for example, relate to the location of facilities nearest to the requesting user device or include a web page in a language corresponding to the geographical location of the user.

In some embodiments of the techniques described herein, resources provided to particular user devices, and a user's interaction with those resources, may be tracked in order to build profiles that can be used to better target information to users. For example, in certain embodiments, resource request information may be recorded by a central database or registry by noting, for example, the requesting user device, user information, the identified keyword or phrase, and information related to the resource provided to the user device. In these embodiments, an analysis may be performed on the recorded data to analyze individual and/or aggregate profile information in order to provide tailored information to the user. Also, in some embodiments, the central database, or software or hardware on a user device or any other device, may collect details regarding a user's activities, which may be used to enable the central database or registry to, for example, determine content consumption habits of the user, help advertisers better target commercials and other content to the user, develop customized resources for the user, as well as perform other similar functions.

Because use of the techniques described herein may result in users being seamlessly directed to a destination, an application with malicious intent or a legitimate application with compromised security may redirect a user to a nefarious destination thus potentially instigating fraud. Therefore, some embodiments of the techniques described herein may utilize, for example, cryptographic certificates that check for the authenticity and security of the destination resource with a database. Other mechanisms for verifying the authenticity and/or security of a destination resource may instead or also be used.

What follows are examples in accordance with certain embodiments of the disclosed techniques. The examples are provided merely as illustrations and are not intended to limit the disclosed techniques.

Broadcast Program Example: In one example, a user watching a television broadcast, such as of the Super Bowl, may desire statistics for various players or teams participating in the Super Bowl. The user may activate an application utilizing the techniques described herein on a user device such as, for example, a mobile telephone, a computer, or other electronic user device for the purpose of receiving such statistics. The user device may capture audio from the television broadcast and the application may use a speech-to-text converter to identify words in the captured audio. For example, the user device may capture the words "Super Bowl." The application may send the identified words to a central registry, such as a VERISIGN™ registry. The central registry may then determine whether any keywords and/or phrases exist that correspond to the identified words and return any resources associated with the keywords and/or phrases to the user device. For example, if the user device captures the words "Super Bowl" and sends those words to the central database, the central database may determine if a phrase equal to the words "Super Bowl" exists, and if so, returns the corresponding resource to the user device, which may be, for example, the URL "http://www.superbowl.com." The URL may be displayed to the user of the user device as a selectable link that when selected by the user results in the loading of a website that includes the desired statistics in a web browser.

Advertising Campaign Example: As another example, a marketing company may register one or more keyword- or phrase-resource pairings for a particular product or group of products. A consumer listening to a commercial that is transmitted via broadcast or other media transmission may be provided a resource, e.g., a web page or website, by activating an application on their phone that identifies words in the commercial broadcast using a speech-to-text converter and that requests a resource from a central database based on the identified words. In some embodiments, all commercials for a particular product or group of products may include the same registered keyword or phrase and, thus, the user may be directed to a common webpage regardless of which of the commercials for the particular product or group of products is broadcast to the users. In other embodiments, each individual commercial for a particular product or group of products may include a different keyword or phrase, and the user may be directed to either a common webpage or different webpages for each commercial based on the different keywords or phrases.

Geographical Location Advertising Example: For a user device enabled to derive geographical location information, a keyword or phrase may be used in connection with geographical location information to determine a resource appropriate for the vicinity of the requesting user device. That is, while in some cases a keyword or phrase may result in the same resource being returned to all user devices from a resolution server irrespective of location, in other cases each user device may receive a resource appropriate for the vicinity of the user device from a resolution server by providing not only words that correspond to keywords or phrases captured by the user device, but also the user device's current geographic location. Accordingly, the resolution server may provide different resources to requesting user devices located in different geographical locations.

Promotional Codes Example: As another example, a keyword or phrase may be paired with a promotional code resource. In this example, a user device may capture an advertising "jingle." An application on the user device may identify words in the jingle and request a resource from a resolution server based on those words. The resolution server may return the associated promotional code to the user device via a hyperlink displayed to the user on the user device. The user, in turn, may access a web page and may use the promotional code at the time of check-out in an e-commerce transaction to avail him/herself of discounts. As a specific example, a DISNEY™ advertisement may comprise audio including words that correspond to a phrase-resource pairing, with the phrase being "Mickey Mouse" and the resource being one or more promotional codes. The user device, upon identifying the words "Mickey Mouse" and requesting any possible resources corresponding to the words may receive a promotional code. For example, a promotional code may be received that allows a customer to purchase tickets to DISNEYLAND™ at a discounted price.

Automatic Contest Registry and/or Voting Example: As still another example, a keyword or phrase may be associated with a resource hosting an online and/or broadcast contest. For example, a user may be provided with a means to cast votes for favorite contestants in television or other broadcast shows, such as, for example, AMERICAN IDOL™, AMERICA'S GOT TALENT™, or the like, in response to one or more words identified in the shows that correspond to a keyword- or phrase-resource pairing.

Radio Example: A user listening to a breaking news broadcast may want more details on the topic of the news report. To do so, the user may activate an application that utilizes the techniques described herein to capture audio. The application may be directed to a webpage or other resource that provides additional details about the news story based on identified words in the captured audio.

The foregoing description of the techniques, along with associated embodiments, has been presented for purposes of illustration only. It is not exhaustive and does not limit the techniques to the precise form disclosed. Those skilled in the art will appreciate from the foregoing description that modifications and variations are possible in light of the above teachings or may be acquired from practicing the techniques. For example, the steps described need not be performed in the same sequence discussed or with the same degree of separation. Likewise, various steps may be omitted, repeated, or combined, as necessary, to achieve the same or similar objectives. Accordingly, the spirit and scope of the techniques described herein should be limited only by the following claims.

## Claims

1. A method for providing audio-activated resource access for user devices(145, 240), the method comprising:
capturing (320) audio at a user device (145, 240);
converting (330) speech transmitted over the audio into text;
transmitting the text to a server system (220, 250) to determine (340) a corresponding keyword or phrase; and
receiving a resource corresponding to the keyword or phrase.

2. The method of claim 1, wherein the method comprises capturing (320) audio from a microphone of the user device (240).

3. The method of claim 1, wherein the method comprises capturing (320) human-comprehensible audio.

4. The method of claim 1, wherein the speech is converted by a speech-to-text converter (247) and the speech-to-text converter (247) comprises speech recognition technology.

5. The method of claim 1, wherein the user device (145, 240) is a mobile phone.

6. The method of claim 1, wherein the server system (220, 250) comprises keyword- or phrase-resource pairings registered by an entity.

7. The method of claim 1, wherein the resource comprises at least one of a Uniform Resource Locator (URL), a Uniform Resource Identifier (URI), a Uniform Resource Number (URN), a domain name, or an Internet Protocol (IP) address.

8. The method of claim 7, wherein receiving the resource comprises:
downloading a webpage associated with the resource.

9. The method of claim 1, wherein the resource comprises an action.

10. A method for providing audio-activated resource access for user devices (145, 240), the method comprising:
receiving a request from a first device to register a keyword- or phrase-resource pairing;
registering (310) the pairing in a database (220, 250);
receiving a request from a second device for a resource corresponding to at least one word included in the request from the second device;
determining (340) whether a keyword- or phrase-resource pairing exists in the database based on the at least one word; and
transmitting (350) at least one resource to the second device.

11. A computer system (200) for providing audio-activated resource access for user devices, the computer system (200) comprising:
a processor (222, 231, 241, 251); and
a memory (223, 232, 242, 252) coupled to the processor (222, 231, 241, 251), the memory (223, 232, 242, 252) storing instructions to cause the processor (222, 231, 241, 251) to perform operations comprising the method of any one of claims 1-10.

12. The computer system (200) of claim 11, wherein the resource comprises at least one of a Uniform Resource Locator (URL), a Uniform Resource Identifier (URI), a Uniform Resource Number (URN), a domain name, or an Internet Protocol (IP) address and receiving the resource causes at least one of downloading a webpage associated with the resource, or storing data associated with the resource.
